# EUROPÄISCHE PATENTANMELDUNG

(11) **EP 3 460 597 A1**
(43) Veröffentlichungstag der Anmeldung: **27.03.2019**
(21) Anmeldenummer: 17192297.4
(22) Anmeldetag: 21.09.2017
(51) Int. Cl.: G05B 19/042, G05B 23/02

(54) **ERSTELLEN EINER KONFIGURATION ZUR EINRICHTUNG EINER KONFIGURATIONSSPEZIFISCHEN WEB-BASIERTEN APPLIKATION UND GENERIEREN EINER SOLCHEN KONFIGURATIONSSPEZIFISCHEN WEB-BASIERTEN APPLIKATION**

(71) Anmelder: Siemens Aktiengesellschaft, 80333 München (DE)
(72) Erfinder: Menzel, Thomas, 91094 Langensendelbach OT Bräuningshof (DE); Merkl, Klaus, 91074 Herzogenaurach (DE); Ziegler, Sabine, 90431 Nürnberg (DE)

(57) **Zusammenfassung**

Die Erfindung betrifft ein Verfahren zum Erstellen einer Konfiguration zur Einrichtung einer konfigurationsspezifischen web-basierten Applikation, wobei die konfigurationsspezifische web-basierte Applikation zur Verarbeitung von Daten einer Steuerungseinheit einer Automatisierungsanlage in Abhängigkeit von der Konfiguration in einer Cloud Umgebung ausgebildet ist, aufweisend die folgenden Schritte:
- Generieren von Konfigurationsdaten auf der Steuerungseinheit;
- Bereitstellen der Konfigurationsdaten auf der Steuerungseinheit zum Versenden in die Cloud Umgebung, wobei mit Hilfe der Konfigurationsdaten die Einrichtung der konfigurationsspezifischen web-basierten Applikation aus einer generellen Applikation durchführbar ist.

Die Erfindung betrifft ferner ein Verfahren zum Generieren einer konfigurationsspezifischen web-basierten Applikation in einer Cloud Umgebung, aufweisen folgende Schritte:
- Empfangen von Konfigurationsdaten durch eine generelle Applikation in der Cloud Umgebung von einer Steuerungseinheit einer Automatisierungsanlage außerhalb der Cloud Umgebung;
- Interpretieren der Konfigurationsdaten der generellen Applikation; und
- Generieren der konfigurationsspezifischen web-basierten Applikation in Abhängigkeit von Konfigurationsdaten.

## Beschreibung

Die Erfindung betrifft ein Verfahren zum Erstellen einer Konfiguration zur Einrichtung einer konfigurationsspezifischen web-basierten sowie ein Verfahren zum Generieren einer konfigurationsspezifischen web-basierten Applikation in einer Cloud Umgebung sowie ein dazugehöriges Computerprogrammprodukt.

Hersteller und Betreiber von Produktionsmaschinen stehen vor der Herausforderung, auf Produktionsmaschinen, wie beispielsweise Verpackungsmaschinen oder Umformmaschinen oder Spritzgussmaschinen ablaufende Prozesse zu steuern und zu bewerten. Aus dem Aufzeichnen von Daten und dem Auswerten aufgezeichneter Daten soll ein Mehrwert generiert werden. Die Analysen solcher Daten sollen vorteilhaft für die Überwachung von Prozessvariablen oder das Monitoring von Prozessabläufen oder die Vorhersage von Wartungsarbeiten genutzt werden.

In Zeiten der Digitalisierung in der Industrieautomatisierung oder Fertigung können für solche Analysen, Auswertungen und Anzeigefunktionen die Rechenkapazitäten auf Servern in einer sogenannten Cloud Umgebung genutzt werden. Dabei sendet eine Produktionsmaschine lokal aufgezeichneten Daten in die Cloud und lässt die Daten dort verarbeiten. So können externe, außerhalb der Fertigungs- oder Produktionsanlage verfügbare Rechenkapazitäten eines Drittanbieters genutzt werden. In der Cloud sind web-basierte Applikationen verfügbar, welche für die Verarbeitung, Analyse, Speicherung, Sicherheit oder Anzeige und Visualisierung der Daten durch einen Nutzer, in diesem Fall den Maschinenanwender, zu verwenden sind.

Aus dem Stand der Technik ist bekannt, dass eine allgemeine oder generelle Applikation in der Cloud vorhanden ist, welche so allgemeingültig für die Auswertung von Daten konzipiert ist, dass verschiedenste Werte verschiedenster Maschinen aus den unterschiedlichsten Branchen und Anwendungsfällen verarbeitet werden können. Möchte ein Nutzer oder Kunde nun eine Applikation in der Cloud verwenden, welche auf die spezifischen Anforderungen seiner Maschine oder Anlage zugeschnitten ist, so bleibt ihm die Möglichkeit, in der Cloud Umgebung selbst Änderungen vorzunehmen. Dafür ist Know-How hinsichtlich der Programmierung und Implementierung in der Cloud nötig, welches in der Regel bei einem Maschinenbaubetrieb nicht vorhanden ist. Die Anpassung auf eine spezifische Konfiguration einer Produktionsmaschine in der Cloud ist somit ohne großen Aufwand für einen Nutzer einer generellen oder universellen Applikation in der Cloud nicht möglich.

Ferner ist es aus dem Stand der Technik bekannt, durch einen Cloud-Anbieter eine kundenspezifische Applikation entwickeln zu lassen. So kann eine auf die Bedürfnisse einer Anlage oder Maschine angepasste Anwendung entwickelt werden, die für den Anwendungsfall des Kunden zugeschnitten ist. Dies geht mit einem erheblichen Entwicklungsaufwand einher, welchen der Kunde vom Cloud-Anbieter in Anspruch nehmen muss. Dafür müssen eine Vielzahl von anlagen- oder anwendungsspezifischen Daten vom Maschinenbetreiber an den Clouddienst geschickt werden, die bei der Entwicklung der Applikations zu berücksichtigen sind. Zugleich ist diese Variante mit einer gewissen Unflexibilität verbunden, da bei einer auftretenden Veränderung der Anforderungen an die web-basierte Applikation der Nutzer sich an den Cloud-Anbieter wenden muss, um ein Update der Applikation zu erhalten oder nutzen zu können.

Vor diesem Hintergrund ist es Aufgabe der vorliegenen Erfindung, ein Verfahren sowie ein Computerprogrammprodukt zugehörig zu dem Verfahren bereit zu stellen, welche ein einfacheres und flexibleres Nutzen einer Cloud-basierten Applikation zur Verarbeitung von Daten einer Steuerungseinheit einer Automatisierungsanlage für spezifische Konfigurationen ermöglicht.

Diese Aufgabe wird durch die Merkmale der unabhängigen Ansprüche gelöst. Vorteilhafte Ausgestaltungen sind in den abhängigen Ansprüchen gegeben.

Die Erfindung betrifft ein Verfahren zum Erstellen einer Konfiguration zur Einrichtung einer konfigurationsspezifischen web-basierten Applikation, wobei die konfigurationsspezifische web-basierte Applikation zur Verarbeitung von Daten einer Steuerungseinheit einer Automatisierungsanlage in Abhängigkeit von der Konfiguration in einer Cloud Umgebung ausgebildet ist, aufweisend die folgenden Schritte:
- Generieren von Konfigurationsdaten auf der Steuerungseinheit;
- Bereitstellen der Konfigurationsdaten auf der Steuerungseinheit zum Versenden in die Cloud Umgebung, wobei mit Hilfe der Konfigurationsdaten die Einrichtung der konfigurationsspezifischen web-basierten Applikation aus einer generellen Applikation durchführbar ist.

Auf einer Steuerungseinheit, beispielsweise einer Bewegungssteuerung für eine Spritzgussmaschine, werden Konfigurationsdaten erstellt. Die Konfigurationsdaten betreffen die auf der Steuerung benötigten oder gewünschten Funktionen der Datenverarbeitung oder Datenanzeige. Das benötigte Know-How ist aufgrund der Vertrautheit eines Produktionsmaschinenherstellers oder Produktionsmaschinennutzers mit der eigenen Maschine vorhanden. Die Konfigurationsdaten legen fest, auf welche Weise Daten der Maschine durch eine Applikation zu verarbeiten sind, um eine aussagekräftige Bewertung durch die Applikation zu erlangen. Je nachdem, welche Aufzeichnung von Werten, beispielsweise von sogenannten Key Performance Indicators, für eine werthaltige Analyse von Abläufen in einer durch die Steuerung gesteuerten Maschine benötigt wird, kann eine spezifisch darauf zugeschnittene Applikation durch den Nutzer auf Seiten der Automatisierungsanlage bei der Cloud angefragt oder angefordert werden.

Die generelle Applikation benötigt für das Einrichten der konfigurationsspezifischen web-basierten Applikation die Konfigurationsdaten, um die spezifischen Anforderungen der Datenverarbeitung und Anzeige von Daten, wie beispielsweise berechneten Werten, zugeschnitten auf den Anwendungsfall durchführen zu können.

Es findet somit eine Auslagerung der Konfigurationserstellung für eine web-basierten Applikation in eine Steuerung auf Seiten einer Fertigungsanlage oder eines Maschinenbauers statt, anstatt diese in der Cloud vorzunehmen. Das vorhandene Wissen eigener Mitarbeiter in der Steuerungstechnik kann auf vorteilhafte Weise genutzt werden, ohne dass zusätzliche Kenntnisse in der Cloud-Programmierung notwendig sind.

Gemäß einer Ausgestaltung erfolgt das Generieren und Bereitstellen der Konfigurationsdaten einmalig während einer Initialisierungsphase oder in einem vorgebbaren Zyklus während eines Betriebs der Steuerungseinheit. Insbesondere werden die Konfigurationsdaten gemeinsam mit einer Inbetriebnahme einer Maschine der Automatisierungsanlage, insbesondere einer Produktionsmaschine, erstellt. Bei einer Änderung der gewünschten konfigurationsspezifischen Applikation kann ein erneuerter Konfigurationsdatensatz auch während eines laufenden Betriebes erstellt werden und für ein Update der kundenspezifischen Cloud-Applikation in die Cloud geschickt werden.

Gemäß einer Ausgestaltung werden ein oder mehrere innerhalb der Steuerungseinheit verfügbare Funktionsblöcke zum Generieren der Konfigurationsdaten genutzt. Insbesondere bietet eine Eingabeumgebung der Steuerung, beispielsweise einer Bewegungssteuerung, bereits vorgefertigte Funktionsblöcke, welche das Erstellen der Konfigurationsdaten erleichtern.

Gemäß einer Ausgestaltung leitet die konfigurationsspezifische web-basierte Applikation aus den Konfigurationsdaten Vorschriften zur Verarbeitung oder Auswertung oder Anzeige von mittels der Applikation zu bewerteten Daten, insbesondere von Ist-Werten, ab. Mittels der Konfigurationsdaten kann vorgegeben werden, nach welcher Vorschrift Daten, beispielsweise Ist-Werte, welche in der Produktionsmaschine erfasst werden, verarbeitet werden sollen oder ausgewertet werden sollen oder nach welchem Schema eine Anzeige von ermittelten Werten erfolgen soll. Auf vorteilhafte Weise werden somit Anzeigen und Monitoring- oder Maintenance-Prozesse ermöglicht, welche sich an bestimmten kundenspezifischen Standards orientieren. Beispielsweise sind in einigen Branchen der sogenannte Weihenstephaner Standard oder die sogenannten OMAC-Richtlinien etabliert, nach welchen Kunden ihre Analysen und Darstellungen vornehmen möchten.

Gemäß einer Ausgestaltung werden die Konfigurationsdaten in einem metasprach-basierten Dokument, insbesondere in einem XML-Format, bereitgestellt. Dabei ist von Bedeutung, dass die Konfigurationsdaten in einem Format übertragen werden, welches durch die generelle Applikation auf der Cloud interpretiert werden kann.

Gemäß einer Ausgestaltung werden zusätzlich zu den Konfigurationsdaten durch die konfigurationsspezifische web-basierte Applikation zu verarbeitende Daten bereit gestellt. Dabei handelt es sich beispielsweise um Ist-Werte. Diese werden beispielsweise in einem laufenden Prozess anhand von Sensoren ermittelt. Die Daten können von der in der Cloud laufenden Applikation als Input verwendet werden zur Durchführung der Analyse, Speicherung oder Visualisierung.

Gemäß einer Ausgestaltung werden die zu verarbeitenden Daten von der Steuerungseinheit zyklisch bereit gestellt und an die Cloud Umgebung gesendet. Diese zu bewertenden Daten werden beispielsweise in einem kurzen Zyklus in die Cloud übertragen, wohingegen die Konfigurationsdaten nur langzyklisch bereit gestellt werden.

Gemäß einer Ausgestaltung werden die Konfigurationsdaten einem Gateway bereit gestellt zur Weiterleitung an die Cloud Umgebung. Insbesondere kommen sogenannte IOT-Gates oder Internet of Things-Gates zum Einsatz, welche als Schnittstelle zwischen einem Fertigungsnetzwerk und einem Cloud Netzwerk fungieren.

Die Erfindung betrifft ferner ein Computerprogrammprodukt mit einem Computerprogramm, das Mittel zur Durchführung des Verfahrens zum Erstellen einer Konfiguration zur Einrichtung einer konfigurationsspezifischen web-basierten Applikation gemäß einem der beschriebenen Ausgestaltungen aufweist, wenn das Computerprogramm auf einer programmgesteuerten Steuereinrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung mit einem Prozessor oder Mikroprozessor oder dergleichen in Frage.

Beispielsweise erfolgt die Erstellung der Konfiguration für die konfigurationsspezifische Applikation auf einer Bewegungssteuerung, beispielsweise einer Simotion oder Simatik der Firma Siemens oder einer PLC oder speicherprogrammierbaren Steuerung.

Die Erfindung betrifft ferner ein Verfahren zum Generieren einer konfigurationsspezifischen web-basierten Applikation in einer Cloud Umgebung, aufweisen folgende Schritte:
- Empfangen von Konfigurationsdaten durch eine generelle Applikation in der Cloud Umgebung von einer Steuerungseinheit einer Automatisierungsanlage außerhalb der Cloud Umgebung;
- Interpretieren der Konfigurationsdaten der generellen Applikation; und
- Generieren der konfigurationsspezifischen web-basierten Applikation in Abhängigkeit von Konfigurationsdaten.

Auf vorteilhafte Weise kann ein Nutzer von Cloud Diensten bereits bei erstmaligem Anbinden an die Cloud sofort einen Mehrwert aus den an die Cloud geschickten Daten beziehen, da die Cloud eine sich selbst konfigurierende und auf den Kunden zugeschnittene Applikation generiert.

Durch das Zusammenspiel von Konfigurationserstellung auf der Steuerungseinheit einerseits und das Interpretieren und Umsetzen der Konfigurationsdaten zur Einrichtung und Erstellung einer konfigurationsspezifischen Applikation auf Seiten der Cloud andererseits ermöglicht die einfache und flexible Nutzung einer konfigurationsspezifischen web-basierten Applikation für einen Nutzer einer Maschine einer Automatisierungsanlage. Somit handelt es sich bei den beiden vorgestellten Aspekten der Erfindung um eng miteinander verzahnte Verfahren, deren Realisierung zwar auf unterschiedlichen Komponenten erfolgt, deren Wirkung aber Abhängigkeiten aufweist.

Gemäß einer Ausgestaltung erfolgt das Interpretieren der Konfigurationsdaten, indem eine Metasprache, in welcher die Konfigurationsdaten formatiert sind, auf der generellen Applikation verarbeitbar, d.h. bekannt ist. Beispielsweise wird als für die generelle Applikation in der Cloud interpretierbares Format ein XML-Dokument, welches die Konfigurationsdaten umfasst, bereit gestellt.

Gemäß einer Ausgestaltung werden zusätzlich zu den Konfigurationsdaten durch die konfigurationsspezifische web-basierte Applikation zu bewertende Daten, insbesondere Ist-Werte, durch die generelle Applikation in der Cloud Umgebung von der Steuerungseinheit empfangen. Insbesondere werden IST-Daten in kurzen Zyklen in die Cloud geschickt und dort regelmäßig und mit möglichst kleiner Verzögerung verarbeitet.

Gemäß einer Ausgestaltung erhält ein Nutzer der Steuerungseinheit mittels der konfigurationsspezifischen web-basierten Applikation eine durch die Konfigurationsdaten auf der Steuereinheit festlegbare Verarbeitung oder Auswertung oder Anzeige der Daten. Auf vorteilhafte Weise wird so die Grundlage der Konfigurationserstellung für eine konfigurationsspezifische Webapplikation in eine Steuerungseinheit verlagert. Die Erstellung der Applikation selbst erfolgt dann in der Cloud.

Gemäß einer Ausgestaltung erfolgt das Empfangen der Konfigurationsdaten von einem Gateway, wobei das Gateway die Konfigurationsdaten von der Steuerungseinheit empfängt.

Die Erfindung betrifft ferner ein Computerprogrammprodukt mit einem Computerprogramm, welches mittels zur Durchführung des Verfahrens nach einem der vorstehend beschriebenen Ansprüche aufweist, wenn das Computerprogramm auf einer programmgesteuerten Einrichtung in der Cloud Umgebung zur Ausführung gebracht wird.

Die Erfindung wird nachfolgend mit Hilfe der Figuren näher erläutert. Es zeigen:
- Figur 1:: eine schematische Darstellung zur Visualisierung von in einer Cloud-Umgebung eingesetzten Webapplikationen gemäß dem Stand der Technik;
- Figur 2:: eine schematische Darstellung zur Veranschaulichung des Verfahrens gemäß einem ersten Aspekt der Erfindung;
- Figur 3:: eine schematische Darstellung zur Veranschaulichung des Verfahrens gemäß einem weiteren Aspekt der Erfindung.

In den Figuren sind funktionsgleiche Elemente mit denselben Bezugszeichen versehen, sofern nichts anderes angegeben ist.

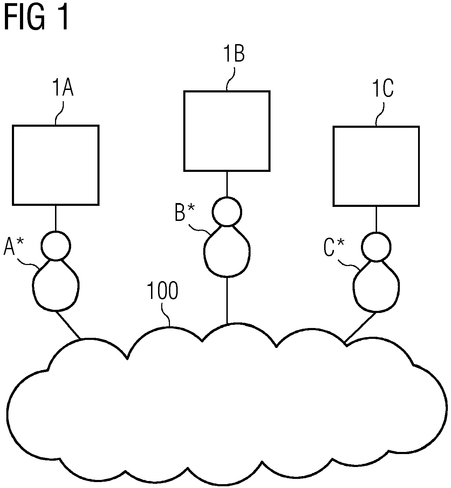

In Figur 1 ist ein Szenario gemäß dem Stand der Technik veranschaulicht, in welchem für drei unterschiedliche Nutzer A*, B*, C* eines Cloud Dienstes in der industriellen Fertigung aus unterschiedlichen Branchen und Anwendungsgebieten drei unterschiedliche Applikation 1A, 1B, 1C benötigt werden. Diese drei unterschiedlichen Applikation 1A, 1B, 1C werden vom Cloud Anbieter speziell für die drei verschiedenen Kunden A*, B*, C* entwickelt. Dafür ist im Vorfeld zu klären, welcher Kunde welche Anforderungen an die web-basierte Applikation stellt. Entsprechend entwickelt ein Webentwickler des Cloudanbieters die kundenspezifischen Applikationen. Der jeweilige Nutzer A*, B*, C* erhält dabei eine auf ihn zugeschnittene Applikation 1A, 1B, 1C, welche nach den im Vorfeld bekannt gegebenen Anforderungen konfiguriert ist.

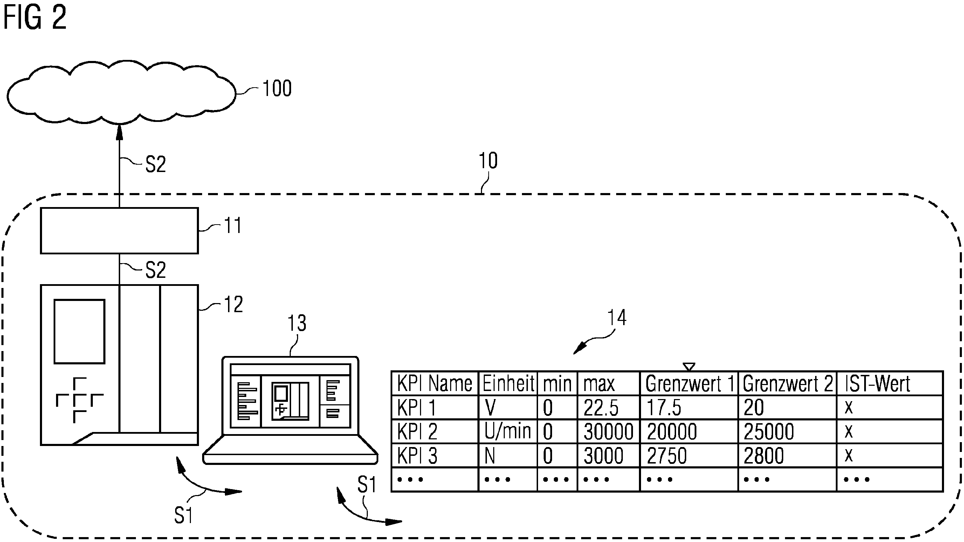

In Figur 2 ist ein erster Aspekt der Erfindung beschrieben, welcher das Erstellen einer Konfiguration für eine konfigurationsspezifische web-basierte Applikation auf Seiten einer Steuerungseinheit 10 veranschaulicht. Die Steuereinheit 10 ist beispielsweise auf einer Spritzgussmaschine oder einer Umformmaschine oder einer Verpackungsmaschine vorgesehen.

Ein mit den Entwicklungsmodulen und mit der Programmiersprache der Steuerung 10 vertrauter Entwickler fertigt eine Konfiguration an, welcher der web-basierten Applikation, welche in der Cloud 100 genutzt werden soll, zu Grunde liegen soll. Anhand dieser Konfiguration wird festgelegt, auf welche Weise eine Datenverarbeitung durch die Applikation erfolgen soll und wie eine Darstellung von gemessenen oder ermittelten oder prognostizierten Daten erfolgen soll. Dazu werden in einem ersten Schritt S1 Konfigurationsdaten auf der Steuerungseinheit 10 generiert. Beispielsweise erfolgt das mit Hilfe eines PCs 13, der für die Inbetriebnahme oder Wartung einer Bewegungssteuerung 12 ausgebildet ist. Diese werden als Datensatz in einem zweiten Schritt S2 auf der Steuerungseinheit 10 bereit gestellt zum Versenden in die Cloud Umgebung 100. Beispielsweise versendet die Steuerungseinheit 10 die Konfigurationsdaten über ein IOT-Gate 11 in die Cloud 100.

Beispielsweise wird während einer Inbetriebnahme einer Umformmaschine und der Einrichtung der Bewegungssteuerung der Umformmaschine, die Konfiguration für die Webapplikation erstellt. So können bereits bei der Projekterstellung wichtige Kenngrößen, welche für die auf das Anwenderprojekt zugeschnittene Funktionalität der Webapplikation wichtig sind, in einer Tabelle 14 aufgeführt werden. Beispielsweise werden verschiedene Kennwerte oder KPIs definiert oder Grenzwerte oder Schwellenwerte für verschiedene relevante Kenngrößen einer Maschine, eines Prozesses oder einer Anlage festgelegt. Hierbei kann auch bereits die Hinterlegung von Ist-Werten erfolgen, welche in der Regel allerdings separat zu den Konfigurationsdaten in die Cloud 100 übertragen werden.

Durch die Konfigurationsdaten wird einer generellen App in der Cloud Umgebung vorgegeben, wie eine Auswertung und Darstellung von Ist-Werten und Kennzahlen erfolgen soll. Die konfigurationsspezifische web-basierte Applikation, welche mittels der Konfigurationsdaten in der Cloud Umgebung eingerichtet werden kann ist somit speziell auf die Projektierung der Steuerung bzw. der Produktionsmaschine ausgerichtet.

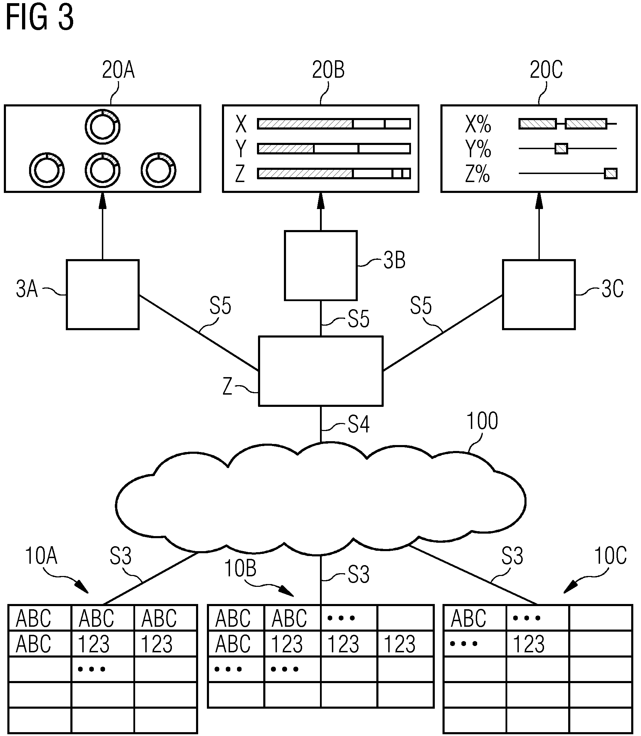

Figur 3 veranschaulicht einen weiteren Aspekt der Erfindung. Es ist schematisch darstellt, wie auf einer generellen Applikation Z in einer Cloud Umgebung 100 mehrere konfigurationsspezifische web-basierte Applikationen 3A, 3B, 3C generiert werden. Beispielsweise handelt es sich bei der Cloud-Umgebung um die MindSphere, einen Cloud-Dienst der Firma Siemens. Dabei werden die anwendungsspezifischen Konfigurationsdaten 10A, 10B, 10C aus den verschiedenen Projekten an die Cloud Umgebung 100 gesendet. Diese können bereits auf den jeweiligen Anwendungsfall oder die spezifische Projektierung der jeweiligen Steuerung zugeschnitten sein. In der Cloud Umgebung 100 erfolgt das Interpretieren S4 der Konfigurationsdaten.

Dafür ist die Metasprache, welche für die Generierung der Konfigurationsdaten 10A, 10B, 10C in der jeweiligen Steuerung beim Kunden verwendet wurde, der generellen Applikation Z in der Cloud Umgebung 100 bekannt, so dass ein Generieren der jeweiligen konfigurationsspezifischen web-basierten Applikation 3A, 3B, 3C ermöglicht wird. Diese jeweilige konfigurationsspezifische web-basierte Applikation 3A, 3B, 3C weist einerseits die jeweils von dem Anwender in den Konfigurationsdaten 10A, 10B, 10C erforderte Funktionalität auf, was die Verarbeitung von Daten angeht, welche in der Cloud Umgebung 100 von der jeweiligen Fertigungsanlage oder Steuerung oder Maschine eines Anwenders empfangen werden. Außerdem erfolgt auch die Anzeige oder die Visualisierung, welche ein Endnutzer sich mittels der konfigurationsspezifischen web-basierten Applikation 3A, 3B, 3C ausgeben oder anzeigen lassen kann, auf eine ganz spezifische Weise. Beispielsweise wird durch Konfigurationsdaten eine Verarbeitung und Darstellung 20A, 20B, 20C von Ist-Werten gemäß einem Standard wie beispielsweise dem Weihenstephaner Standard oder dem OMAC-Richtlinien gefordert und ermöglicht. In anderen Varianten kann ein kundenspezifischer oder anderer branchenüblicher Standard für die Darstellung der Ergebnisse oder Resultate der jeweiligen web-basierten Applikation 3A, 3B, 3C genutzt werden.

Auf vorteilhafte Weise erfolgt eine selbstständige Konfiguration von Applikationen in der Cloud ausgerichtet auf verschiedene Anwendungen anhand von Vorgaben durch Konfigurationsdaten, welche außerhalb der Cloud Umgebung beim Kunden in einer Steuerung erstellt wurden. Das Wissen und Know-How und die Erfahrung von Mitarbeitern bei einem Anwender der Applikation im Bereich der Steuerungstechnik kann vorteilhafterweise eingesetzt werden, ohne dass zusätzliche Kenntnisse in der Cloud-Programmierung oder Web-Programmierung notwendig wären.

Somit ermöglicht die Erfindung eine verringerte Komplexität bei gleichzeitig höherer Flexibilität, indem die konfigurationsspezifischen Applikation regelmäßig angepasst werden kann und dies durch den Anwender oder Kunden selbst initiierbar ist. Bereits bei erstmaliger Anbindung einer Maschine beziehungseise der Steuerung einer Maschine an die Cloud Umgebung, d.h. bei erstmaliger Nutzung eines Cloud Dienstes, der eine Applikation oder Anwendung bereit stellt, kann ein hoher Mehrwert erzielt werden, in dem eine anwender- oder branchenspezifische Applikation statt einer generellen Applikation nutzbar ist, ohne dass eine Programmierung dieser App durch den Cloud Anbieter erfolgen müsste.

Obwohl die Erfindung im Detail durch das Ausführungsbeispiel näher illustriert und beschrieben wurde, so ist die Erfindung nicht durch die offenbarten Ausgestaltungen und Beispiele eingeschränkt und andere Variationen können vom Fachmann hieraus abgeleitet werden, ohne den Schutzumfang der Erfindung zu verlassen

## Patentansprüche

1. Verfahren zum Erstellen einer Konfiguration zur Einrichtung einer konfigurationsspezifischen web-basierten Applikation, wobei die konfigurationsspezifische web-basierte Applikation zur Verarbeitung von Daten einer Steuerungseinheit einer Automatisierungsanlage in Abhängigkeit von der Konfiguration in einer Cloud-Umgebung ausgebildet ist, aufweisend die folgenden Schritte:
- Generieren (S1) von Konfigurationsdaten auf der Steuerungseinheit;
- Bereitstellen (S2) der Konfigurationsdaten auf der Steuerungseinheit zum Versenden in die Cloud-Umgebung, wobei mit Hilfe der Konfigurationsdaten die Einrichtung der konfigurationsspezifischen web-basierten Applikation aus einer generellen Applikation durchführbar ist.

2. Verfahren nach Anspruch 1, wobei das Generieren und Bereitstellen der Konfigurationsdaten einmalig während einer Initialisierungsphase oder in einem vorgebbaren Zyklus während eines Betriebs der Steuerungseinheit erfolgt.

3. Verfahren nach Anspruch 1 oder 2, wobei ein oder mehrere innerhalb der Steuerungseinheit verfügbare Funktionsblöcke zum Generieren der Konfigurationsdaten genutzt werden.

4. Verfahren nach einem der vorstehenden Ansprüche, wobei die konfigurationsspezifische web-basierte Applikation aus den Konfigurationsdaten Vorschriften zur Verarbeitung oder Auswertung oder Anzeige von mittels der Applikation zu bewertenden Daten, insbesondere IST-Werten, ableitet.

5. Verfahren nach einem der vorstehenden Ansprüche, wobei die Konfigurationsdaten in einem Metasprach-basierten Dokument, insbesondere in einem xml-Format, bereitgestellt werden.

6. Verfahren nach einem der vorstehenden Ansprüche, wobei zusätzlich zu den Konfigurationsdaten durch die konfigurationsspezifische web-basierte Applikation zu verarbeitende Daten bereitgestellt werden.

7. Verfahren nach Anspruch 6, wobei die zu verarbeitenden Daten von der Steuerungseinheit zyklisch oder in Abhängigkeit von einer Wertänderung bereitgestellt und an die Cloud-Umgebung gesendet werden.

8. Verfahren nach einem der vorstehenden Ansprüche, wobei die Konfigurationsdaten einem Gateway bereitgestellt werden zur Weiterleitung an die Cloud-Umgebung.

9. Computerprogrammprodukt mit einem Computerprogramm, das Mittel zur Durchführung des Verfahrens nach einem der Ansprüche 1 bis 8 aufweist, wenn das Computerprogramm auf einer programmgesteuerten Steuerungseinrichtung zur Ausführung gebracht wird.

10. Verfahren zum Generieren einer konfigurationsspezifischen web-basierten Applikation in einer Cloud-Umgebung, aufweisend folgende Schritte:
- Empfangen (S3) von Konfigurationsdaten durch eine generelle Applikation in der Cloud-Umgebung von einer Steuerungseinheit einer Automatisierungsanlage außerhalb der Cloud-Umgebung;
- Interpretieren (S4) der Konfigurationsdaten in der generellen Applikation; und
- Generieren (S5) der konfigurationsspezifischen Applikation in Abhängigkeit von den Konfigurationsdaten.

11. Verfahren nach Anspruch 10, wobei das Interpretieren der Konfigurationsdaten erfolgt, indem eine Metasprache, in welcher die Konfigurationsdaten formatiert sind, auf der generellen Applikation bereitgestellt wird.

12. Verfahren nach Anspruch 10 oder 11, wobei zusätzlich zu den Konfigurationsdaten durch die konfigurationsspezifische web-basierte Applikation zu bewertende Daten, insbesondere IST-Werte, durch die generelle Applikation in der Cloud-Umgebung von der Steuerungseinheit empfangen werden.

13. Computerprogrammprodukt mit einem Computerprogramm, das Mittel zur Durchführung des Verfahrens nach einem der Ansprüche 10 bis 12 aufweist, wenn das Computerprogramm auf einer programmgesteuerten Einrichtung in der Cloud-Umgebung zur Ausführung gebracht wird.
